# EUROPEAN PATENT APPLICATION

(11) **EP 3 751 020 A1**
(43) Date of publication of application: **16.12.2020**
(21) Application number: 19382484.4
(22) Date of filing: 10.06.2019
(51) Int. Cl.: C25B 1/26, B63B 59/04

(54) **METHOD AND SYSTEM FOR GENERATING ONE OR MORE COMPOUNDS COMPRISING CHLORINE ON A PORTION OF A SURFACE SUBMERGED IN SALT WATER**

(71) Applicant: Investigación y desarrollo naval S.L.U., 28020 Madrid (ES)
(72) Inventor: Samaniego Miracle, Alejandro, 28020 Madrid (ES)
(74) Representative: Balder IP Law, S.L.

(57) **Abstract**

A method of generating one or more compounds comprising chlorine with an oxidation number higher than -1, for example hypochlorous acid, on a portion (6) of a surface (3) submerged in salt water; the method comprising the steps of providing a first electrode (7) in the salt water, providing at least one second electrode (2) in the salt water, causing a direct electric current to flow between the first electrode (7) and the at least one second electrode (2), such that Cl- ions of the salt water in contact with the at least one second electrode (2) are turned into Cl2 (5), wherein the at least one second electrode (2) is arranged under the portion (6) of the surface (3) such that at least part of the Cl₂ (5) produced by the at least one second electrode (2) rises and contacts the portion (6) of the surface (3). The invention also relates to a system for carrying out said method.

## Description

### TECHNICAL FIELD

The present invention relates to efficient and scalable antifouling systems and methods that can be applied to submerged parts ships, either isolated parts, or to whole hulls.

### STATE OF THE ART

Known in the art are methods of generating one or more compounds comprising chlorine with an oxidation number higher than -1, for example hypochlorous acid, on a portion of a surface submerged in salt water; the method comprising the steps of:
providing a first electrode in the salt water;
providing at least one second electrode in the salt water;
causing a direct electric current to flow between the first electrode and the at least one second electrode, such that Cl⁻ ions of the salt water in contact with the at least one second electrode are turned into Cl₂,

For example, US6173669 discloses a marine fouling prevention system. This document proposes to generate the chlorine on the surface to be protected. For this, the anodic and cathodic behavior of the surface to be protected is alternated during different time intervals, which means anodically polarizing the surface to be protected during a time interval to generate the chlorine and then depolarize it. For this purpose the two parts of the hull are electrically separated by an insulator and each part of the ship is polarized alternately, always generating the chlorine on the surface to be protected, by applying an electric current proportional to the anodic area to be protected.

However, when a metal surface is anodically polarized, it can be subjected to electrolytic corrosion.

### DESCRIPTION OF THE INVENTION

For overcoming the mentioned drawbacks, the present invention proposes a method of generating one or more compounds comprising chlorine with an oxidation number higher than -1, for example hypochlorous acid, on a portion of a surface submerged in salt water; the method comprising the steps of:
providing a first electrode in the salt water;
providing at least a second electrode in the salt water;
causing a direct electric current to flow between the first electrode and the at least one second electrode, such that Cl⁻ ions of the salt water in contact with the at least one second electrode are turned into Cl₂;
wherein the at least one second electrode is arranged under the portion of the surface such that at least part of the Cl₂ produced by the at least one second electrode rises and contacts the portion of the surface.

The method may be a method of antifouling a portion of a surface, e.g. a portion of a surface of a hull or a portion of a surface of a propeller, when the surface is in salt water, e.g. submerged in a sea or ocean.

In the present disclosure, antifouling of the portion of the surface should be understood as the inhibition of accumulation of organisms, and in particular the inhibition of accumulation of organisms whose accumulation is detrimental to the function performed by the portion of the surface.

In the present disclosure, organism should be understood as a living system (i.e. the organism is alive). The type of organisms whose accumulation is inhibited depends on the type of biocide and on the concentration of biocide on the antifouled portion of the surface. For example, while a low concentration of a particular biocide can be enough to inhibit accumulation of microorganisms, the inhibition of accumulation of bigger organisms, such as algae or barnacles, may require a higher concentration of the same biocide. In particular, in some embodiments of the invention, the method is used to inhibit accumulation of organisms which are susceptible (e.g. harmed or troubled) to hypochlorous acid (i.e. HOCl) or to hypochlorite (i.e. OCl⁻), In the present disclosure, a biocide is a substance which causes harm or troubles an organism susceptible of accumulating on the portion of the surface. In the present disclosure, salt water is water containing dissolved salts, in particular NaCl and/or other salts having Cl⁻ as anion when dissolved in water.

The differentiating characteristics solve the technical problem posed by the prior art devices relating to the possibility of electrolytic corrosion of the surface to be protected from the biological incrustation.

The differentiating characteristics solve the technical problem by isolating the surface to be protected from the biological incrustation of the auxiliary anode, avoiding having to anodically polarize the surface to be protected, as done in the prior art methods.

The auxiliary anode becomes a fungible and the surface to be protected does not suffer corrosion risk. In addition, the need to control the polarity of the circuit is avoided, so that the elements needed to power the system are reduced.

It is further pointed out that the circuit can be connected directly to a renewable energy source, for example solar or continuous motor wind, without the need for conversion elements or signal control. For the antifouling effect, a uniform current over time is not required. In addition, the possibility of designing the auxiliary anode to obtain additional functionalities such as propeller protector or stabilizing fin is emphasized, as described in the following variants.

In some embodiments the first electrode is a cathode.

In some embodiments, the portion of the surface which comprises the first electrode may be made of a material which is corroded when being under salt water such as steel or aluminium. As a result of behaving as a cathode, corrosion of the first electrode is inhibited.

In a preferred embodiment, the first electrode is partly or completely within or on the portion of the surface where accumulation of organisms is to be inhibited. In other embodiments, the first electrode is positioned near the portion of the surface, such as at a distance of less than 1 m., for example, less than 50, 25, 10 or 5 cm from that surface.

In some embodiments, a plurality of first electrodes behaving as cathodes are provided.

In some embodiments of the invention, the at least one second electrode is an anode. In an embodiment, the at least one second electrode faces said portion of the surface. The at least one second electrode may be made of a material which do not degrade, in particular is not corroded, when the at least one second electrode generates Cl₂ gas, such as graphite, mixed metal oxide, platinum or niobium. In a preferred embodiment, the at least one second electrode is made of titanium coated with mixed metal oxides (Ti MMO electrode), more preferably, the at least one second electrode is made of titanium coated with oxides of precious metals such as for example RuO₂, IrO₂ and/or PtO₂. Therefore, in some embodiments, the at least one second electrode can permanently act as an anode without requiring much maintenance.

Cl⁻ ions of the salt dissolved in the salt water are turned into Cl₂ through the following reaction which takes place on the at least one second electrode:

2Cl⁻ → Cl₂ (g) + 2e-

The electrons generated by the reaction form part of the aforementioned direct current.

In addition, in an embodiment, the direct current provides a cathodic protection of the first electrode.

The expression "under" is to be understood in the sense that the at least one second electrode is placed in relation to the portion of the surface such that at least part of the Cl₂ produced by the at least one second electrode will rise and thereby contact the portion. "Under" is thus not intended to necessarily imply a position vertically below the portion, although this option may often be preferred. In some embodiments of the invention, the Cl₂ gas generated by/on the at least one second electrode is contained in bubbles which rise due to their lower density with respect to salt water. The bubbles separate from the at least one second electrode, rise and, then, contact the portion of the surface. Afterwards the bubbles can move over, such as along and/or across, the portion of the surface. As bubbles separate from the at least one second electrode, they leave space for new Cl₂ gas to be produced. As the Cl₂ gas moves away from the at least one second electrode and over the portion of the surface, it undergoes the following reactions, which generate biocide products, in particular HOCl and OCL-:

Cl₂ (g)⇄ Cl₂ (ac), K_{H}=6.2x10⁻²

Cl₂ (ac) + H₂O⇄ HOCl + H⁺ + Cl⁻, K_{H}=4x10⁻⁴

HOCl⇄ H⁺+OCl⁻, pKa=7.5

The biocide action of the biocide products is not restricted to a conductive portion of the surface, as their production does not rely on the conductivity of the antifouled portion of the surface.

The instability of HOCl and OCl⁻ restrict their biocide effect to a vicinity of the region where they are generated, and therefore it is important that the Cl₂ gas substantially reaches and contacts the portion of the surface. In a preferred embodiment, the anode is near the portion of the surface to be treated, such as at a distance of less than 1 m., for example, less than 50, 25, 10 or 5 cm from the portion of the surface.

The present invention is considered to be potentially energy efficient as the Cl₂ gas can be produced substantially without interruption, and it is also considered potentially advantageous in that it may provide for cathodic protection of the first electrode, which in some embodiments may comprise or consist in part of a vessel, such as the hull of a boat or other vessel or part thereof. The Cl₂ when coming into contact with water generates other species responsible for the biocidal effect.

In some embodiments, the surface comprises at least part of the first electrode.

In some embodiments, the first electrode is a cathode and the at least one second electrode is an anode.

In the present disclosure, a cathode is an electrode through which electrons enter the salt water due to a reduction reaction (e.g. due to the reduction reaction 4H₂O + 4e- -> 2H₂ + 40H-). In the present disclosure, an anode is an electrode through which electrons leave salt water due to an oxidation reaction (e.g. due to the oxidation reaction 2Cl- -> Cl₂ + 2e⁻). Therefore, the cathode is the element where reduction reactions take place and the anode is the element where oxidation reactions take place.

In some embodiments, the at least one second electrode is at a distance from the portion of the surface. In this way, accumulation of organisms can be remotely inhibited on surfaces such as a portion of a surface of a propeller, without requiring the second electrode to be physically placed on the propeller.

In some embodiments, the surface is a surface of a marine vehicle.

In some embodiments, the portion of the surface is a portion of a surface of a propeller of the marine vehicle.

In some embodiments, the propeller is connected to an auxiliary actuator configured to move the propeller to place the propeller over the at least one second electrode. In some embodiments, the at least one second electrode is connected to an auxiliary actuator configured to move the at least a second electrode to place the at least one second electrode under the portion of the surface.

In some embodiments, the at least one second electrode is arranged in a propeller guard of the propeller of the marine vehicle.

In some embodiments, the at least one second electrode is arranged in a full keel.

In some embodiments, the at least one second electrode is attached to a propeller shaft bracket.

In some embodiments, the at least one second electrode comprises a plurality of second electrodes separated from each other.

In this way, a smaller area of the at least one second electrode with respect to the area of the portion of the surface can be achieved. The plurality of second electrodes produce Cl₂ gas at different locations and the gas will disperse and potentially contact a portion of a surface having a relatively large area in relation to the total surface area of the plurality second electrodes.

In some embodiments, at least some of the electrodes of the plurality of second electrodes are arranged along the surface and wherein at least one of the electrodes of the plurality of second electrodes is arranged at a different height than at least another one of the electrodes of the plurality of second electrodes.

In this way, an even smaller area of the at least one second electrode with respect to the area of the portion of the surface can be achieved. Thus, different electrodes can contribute to the antifouling effect on different sub-portions of the surface, for example, on different longitudinal sub-portions of a hull or other part of a vessel.

In some embodiments, the surface is a submerged surface of a hull, a submerged surface of a pipe, a submerged surface of a propeller shaft or a submerged surface of a container.

In some embodiments, at least some of the plurality of second electrodes are arranged along a fin keel, and preferably along and/or across the outer surface of a fin keel.

The invention also relates to a system for applying hypochlorous acid on a portion of a surface submerged in salt water, the system comprising:
an anode;
a cathode; and
a direct current generator electrically connected with the anode and the cathode, arranged to cause a direct electric current to flow between the anode and the cathode, wherein:
   the anode is arranged under the portion of the surface such that at least part of the Cl₂ produced by the anode rises and contacts the portion of the surface.

In some embodiments, the system comprises a direct current source directly connected to the anode and the cathode, without any other electronic component being placed in the circuit comprising anode, cathode and the direct current source, in particular, no circuit which reverses the current direction or similar.

In some embodiments, there is a mechanical connection between the surface submerged in salt water and the anode.

### BRIEF DESCRIPTION OF THE DRAWINGS

To complete the description and in order to provide a better understanding of the invention, a set of drawings is provided. Said drawings form an integral part of the description and illustrate embodiments of the invention, which should not be interpreted as restricting the scope of the invention, but just as an example of how the invention can be carried out. The drawings comprise the following figures:
Figure 1 is a perspective view of an embodiment of a system for applying hypochlorous acid to a portion of a propeller submerged in salt water in which the anode is substantially arranged in a vertical plane.
Figure 2 is a perspective view of an embodiment of a system applied to the surface of a propeller and part of the surface of a propeller guard and in which the anode extends in a horizontal plane and is integrated with the propeller guard.
Figure 3 is a perspective view of an embodiment wherein the support comprises a cathode and in which the anode extends in a horizontal plane.
Figure 4 is a perspective view of an embodiment in which the anode extends surrounding the propeller.
Figure 5 is a perspective view of an embodiment of a system in which the anode is integrated in a fin-shaped support.
Figures 6 to 8 are perspective views of embodiments of a system in which an optional sacrificial anode is shown.
Figure 9 is a perspective view of an embodiment of a system wherein the propeller is connected to the hull of a ship through a propeller shaft, in which the hull comprises a cathode, in which the anode is mechanically connected to the propeller shaft and in which the anode extends in the vertical direction.
Figure 10 is similar to figure 9, but the anode extends in the horizontal direction.
Figure 11 is similar to figures 9 or 10, but here the anode extends parabolically surrounding the propeller.
Figure 12 is a perspective view of an embodiment wherein the propeller is supported by the end keel of a ship, in which the hull comprises a cathode and in which the anode is in the end keel.
Figure 13 is a side view of an embodiment wherein the portion of the surface includes part almost the whole hull of a marine vehicle, wherein a plurality of anodes are on the surface of the hull and extend along it at different heights thereof.
Figure 14 shows the effect of applying the method of the present invention to a lower portion of a ship's hull.

### DESCRIPTION OF A WAY OF CARRYING OUT THE INVENTION

Next, several embodiments of the invention will be explained, which differ basically in their geometry, since that is the essence of the invention, specifically how the surfaces to be protected are arranged as a function of the arrangement of the electrodes.

Finally, a test of the high efficiency of the system object of the present invention will also be presented.

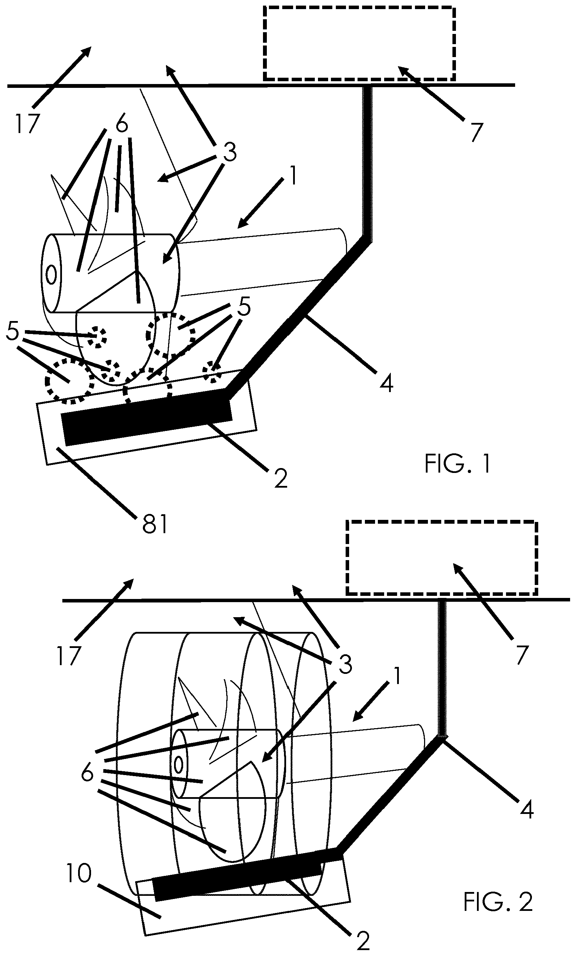

First, with reference to Figure 1, we highlight the basic elements of the invention.

The method of generating hypochlorous acid on a portion 6 of a surface 3 submerged in salt water comprises the steps of:
providing a first electrode 7 in the salt water;
providing at least one second electrode 2 in the salt water;
causing a direct electric current to flow between the first electrode 7 and the at least one second electrode 2, such that Cl⁻ ions of the salt water in contact with the at least one second electrode 2 are turned into Cl₂, which is labelled with the reference 5.

According to the invention, the second electrode 2 is arranged under the portion 6 of the surface 3 such that at least part of the Cl₂ 5 produced by the second electrode 2 rises and contacts the portion 6 of the surface 3.

Specifically, Figure 1 is a perspective view of an embodiment of a system for applying hypochlorous acid to a portion of a surface 6 submerged in salt water according to the invention, wherein the portion of the surface 6 includes part of the surface of a propeller 3.

The propeller is mechanically connected to a support which is the hull of a marine vehicle, wherein said support comprises a cathode 7 and in which the anode extends in a vertical plane.

Fig. 2 is a perspective view of an embodiment of a system for applying hypochlorous acid to a portion of a surface 3 submerged in salt water according to the invention, wherein the portion of the surface 3 includes part of the surface of a propeller 6 and part the surface of a propeller guard, the propeller being mechanically connected to hull 17 of a marine vehicle, wherein said support comprises a cathode 7 and in which the anode 2 extends in a plane 10 horizontal and is integrated with the propeller guard.

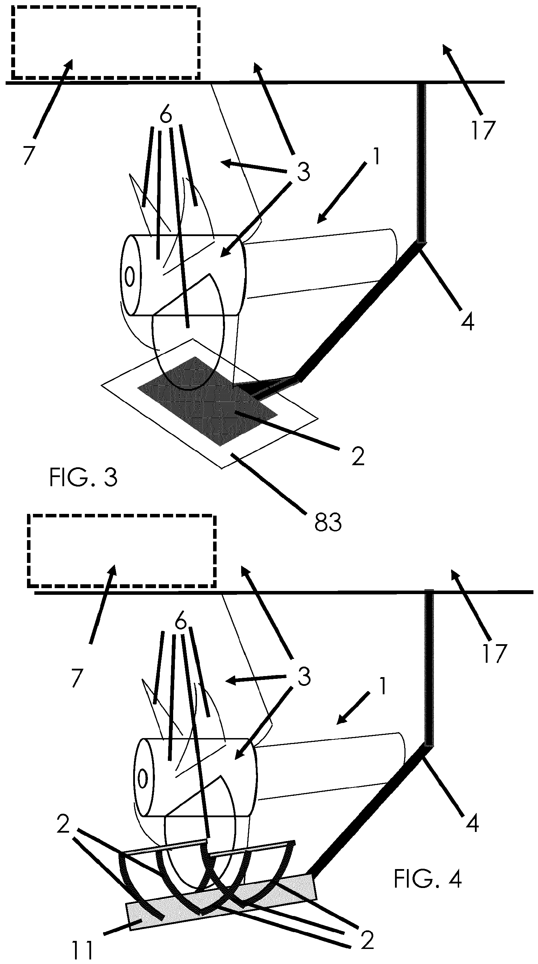

Figure 3 is a perspective view of an embodiment of a system for applying hypochlorous acid to a portion of a surface submerged in salt water according to the invention, wherein the portion of the surface includes part of the surface of a propeller, the propeller being mechanically connected to the hull 17 of a marine vehicle, wherein said support comprises a cathode 7 and in which the anode 2 extends in a horizontal plane 83.

Figure 4 is a perspective view of an embodiment of a system for applying hypochlorous acid to a portion of a surface 3 submerged in salt water according to the invention, wherein the portion of the surface includes part of the surface 3 of a propeller 6, the propeller 6 being mechanically connected to the hull 17 of a marine vehicle, wherein said support comprises a cathode 7 and in which the anode 2 extends parabolically surrounding the propeller. In this embodiment there is a support 11 for arranging the anodes 2.

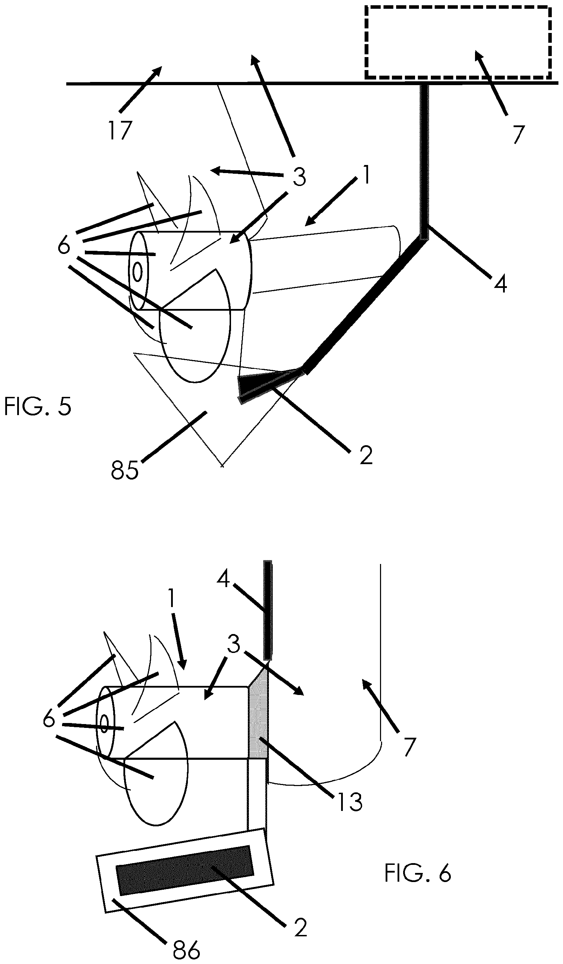

Figure 5 is a perspective view of an embodiment of a system for applying hypochlorous acid to a portion of a surface submerged in salt water according to the invention, wherein the portion of the surface 3 includes part of the surface of a propeller 6, the propeller 6 being mechanically connected to the hull 17 of a marine vehicle, in which the hull 17 comprises a cathode 7 and in which the anode 2 is integrated in a fin-shaped support 85.

Figure 6 is a perspective view of an embodiment of a system for applying hypochlorous acid to a portion of a surface submerged in salt water according to the invention, wherein the portion of the surface includes part of the surface of a propeller 6, the propeller 6 being mechanically connected to a support 7, the anode 2 extending in the vertical direction and in which a sacrificial anode 13 is shown which can be dispensed with.

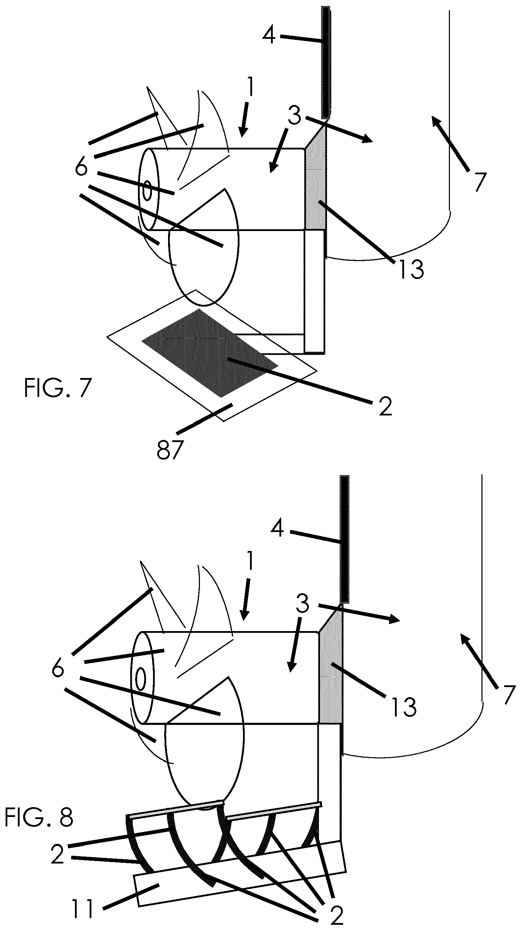

Figure 7 is a perspective view of an embodiment according to the invention of a system for applying hypochlorous acid to a portion of a surface submerged in salt water, wherein the portion of the surface 6 includes part of the surface of a propeller 3, the anode 2 extending in a horizontal plane 87 and showing a sacrificial anode 13 that can be dispensed with. The sacrificial anode is connected to a cable 4.

Figure 8 is a perspective view of an embodiment of a system for applying hypochlorous acid to a portion of a surface submerged in salt water according to the invention, wherein the portion of the surface includes part of the surface of a propeller, in which the anode 2 parabolically extends around the propeller 3 and in which is shown an anode of sacrifice 13 that can be dispensed with.

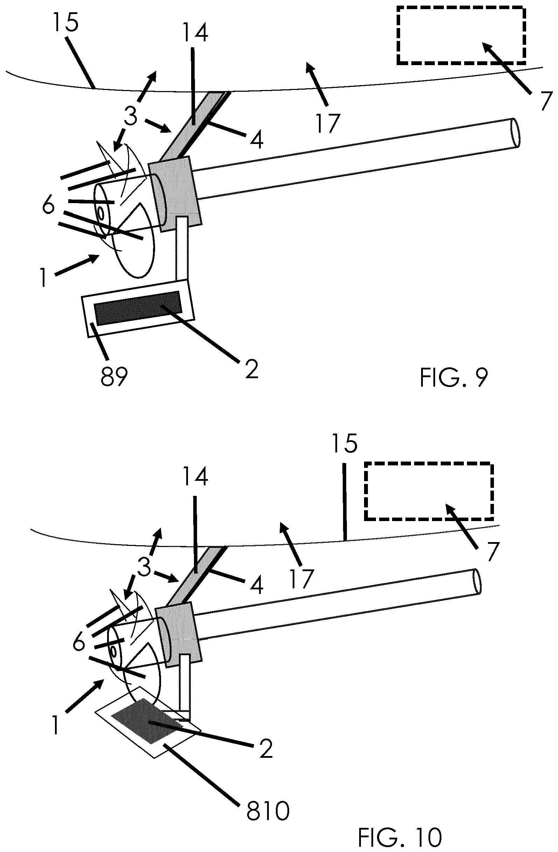

Figure 9 is a perspective view of an embodiment of a system for applying hypochlorous acid to a portion of a surface 6 submerged in salt water according to the invention, wherein the portion of the surface 6 includes part of the surface of a propeller 3, the propeller 3 being connected to the hull of a ship through a propeller shaft, in which the hull comprises a cathode 7, in which the anode 2 is mechanically connected to the propeller shaft and in which the anode 2 is arranged in a vertical plane 89.

Figure 10 is a perspective view of an embodiment of a system for applying hypochlorous acid to a portion of a surface submerged in salt water according to the invention, wherein the portion of the surface includes part of the surface of a propeller, the propeller being connected to the hull of a ship through a propeller shaft, in which the hull comprises a cathode, in which the anode is mechanically connected to the propeller shaft and in which the anode extends in the horizontal direction.

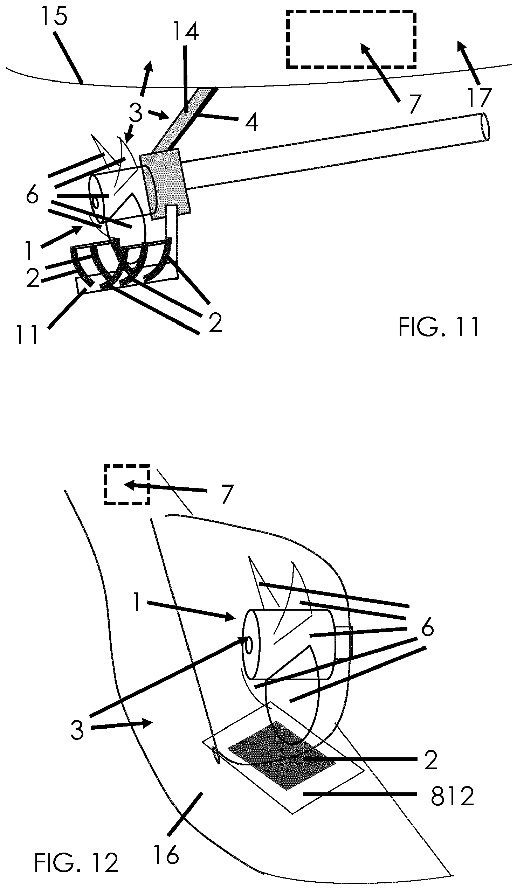

Figure 11 is a perspective view of an embodiment of a system for applying hypochlorous acid to a portion of a surface submerged in salt water according to the invention, wherein the portion of the surface includes part of the surface of a propeller, the propeller being connected to the hull of a ship through a propeller shaft, in which the hull comprises a cathode, in which the anode is mechanically connected to the propeller shaft and in which the anode extends parabolically surrounding the propeller.

Figure 12 is a perspective view of an embodiment of a system for applying hypochlorous acid to a portion of a surface submerged in salt water according to the invention, wherein the portion of the surface includes part of the surface of a propeller, the propeller being supported by the end keel of a ship, in which the hull comprises a cathode and in which the anode is in the end keel.

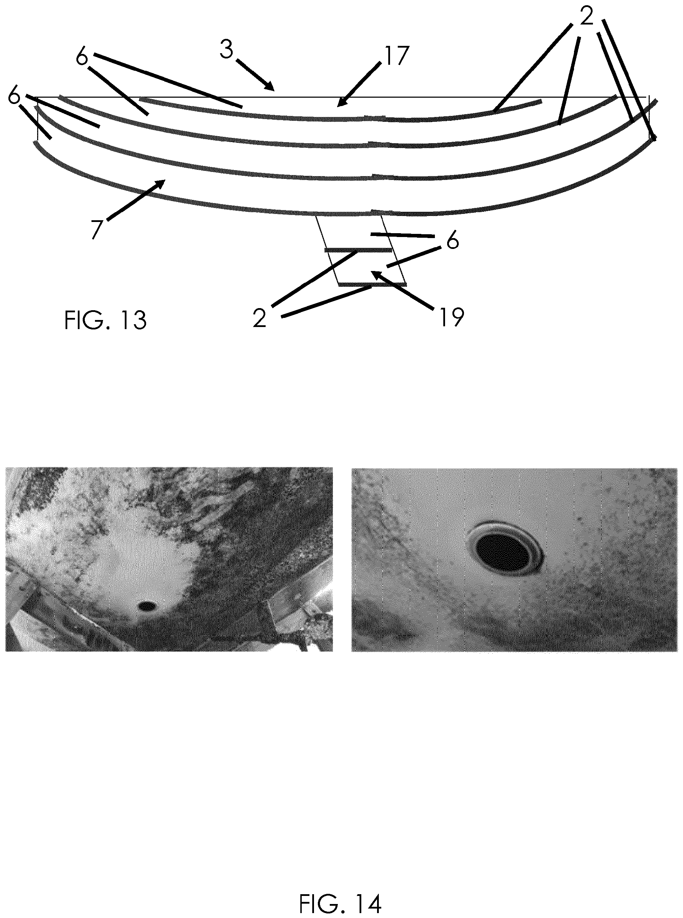

Figure 13 is a side view of an embodiment of a system for applying hypochlorous acid to the hull 17 of a ship, wherein a plurality of linear anodes 2 are on the surface of the hull 17 and extend along it at different heights thereof.

Figure 14 shows the effect of applying the method of the present invention to a lower portion of a ship's hull. The photos show an area that has been exposed to chlorine gas generated by electrodes.

In this text, the term "comprises" and its derivations (such as "comprising", etc.) should not be understood in an excluding sense, that is, these terms should not be interpreted as excluding the possibility that what is described and defined may include further elements,

The invention is obviously not limited to the specific embodiments described herein, but also encompasses any variations that may be considered by any person skilled in the art within the general scope of the invention as defined in the claims.

## Claims

1. A method of generating one or more compounds comprising chlorine with an oxidation number higher than -1, for example hypochlorous acid, on a portion (6) of a surface (3) submerged in salt water; the method comprising the steps of:
providing a first electrode (7) in the salt water;
providing at least one second electrode (2) in the salt water;
causing a direct electric current to flow between the first electrode (7) and the at least one second electrode (2), such that Cl⁻ ions of the salt water in contact with the at least one second electrode (2) are turned into Cl₂ (5);
**characterised in that** the at least one second electrode (2) is arranged under the portion (6) of the surface (3) such that at least part of the Cl₂ (5) produced by the at least one second electrode (2) rises and contacts the portion (6) of the surface (3).

2. The method according to claim 1, wherein the surface (3) comprises at least part of the first electrode (7).

3. The method according to any of the preceding claims, wherein the first electrode (7) is a cathode and the at least one second electrode (2) is an anode.

4. The method according to any of the preceding claims, wherein the at least one second electrode (2) is at a distance from the portion (6) of the surface (3).

5. The method according to any of the preceding claims, wherein the surface (3) is a surface of a marine vehicle.

6. The method according to claim 5, wherein the portion (6) of the surface (3) is a portion of a surface of a propeller (1) of the marine vehicle.

7. The method according to claim 6, wherein the at least one second electrode (2) is arranged in a propeller guard (11) of the propeller (1) of the marine vehicle.

8. The method according to claim 6, wherein the at least one second electrode (2) is arranged in a full keel (16).

9. The method according to claim 6, wherein the at least one second electrode (2) is attached to a propeller shaft bracket (14).

10. The method according to any one of the preceding claims, wherein the at least one second electrode (2) comprises a plurality of second electrodes (2) separated from each other.

11. The method according to claim 10, wherein at least some of the electrodes (2) of the plurality of second electrodes (2) are arranged along the surface (3) and wherein at least one of the electrodes (2) of the plurality of second electrodes (2) is arranged at a different height than at least another one of the electrodes (2) of the plurality of second electrodes.

12. The method according to claim 11, wherein the surface (3) is a submerged surface of a hull (17), a submerged surface of a pipe, a submerged surface of a propeller shaft or a submerged surface of a container.

13. The method according to any of claims 10 to 12, wherein at least some of the plurality of second electrodes (2) are arranged along a fin keel (19).

14. A system for applying hypochlorous acid on a portion (6) of a surface (3) submerged in salt water, the system comprising:
an anode (2);
a cathode (7); and
a direct current generator electrically connected with the anode (2) and the cathode (7), arranged to cause a direct electric current to flow between the anode (2) and the cathode (7), **characterized in that**:
the anode (2) is arranged under the portion (6) of the surface (3) such that at least part of the Cl₂ (5) produced by the anode (2) rises and contacts the portion (6) of the surface (3).
